# EUROPEAN PATENT SPECIFICATION

(11) **EP 3 127 712 B1**
(45) Date of publication and mention of the grant of the patent: **26.07.2023**
(21) Application number: 16181560.0
(22) Date of filing: 27.07.2016
(51) Int. Cl.: B60C 1/00, C08L 15/00

(54) **PNEUMATIC TIRE**
LUFTREIFEN
PNEUMATIQUE

(30) Priority: 05.08.2015 US 201514818774
(43) Date of publication of application: 08.02.2017
(73) Proprietor: The Goodyear Tire & Rubber Company, Akron, OH 44316 (US)
(72) Inventor: ISITMAN, Nihat Ali, L-9052 Ettelbruck (LU); POMPEI, Manuela, L-9768 Reuler (LU); THIELEN, Georges Marcel Victor, L-4995 Schouweiler (LU)
(74) Representative: Kutsch, Bernd

(56) References cited:
- EP-A1- 1 637 353
- EP-A1- 1 911 797
- EP-A1- 2 412 731
- EP-A1- 2 433 812
- EP-A1- 3 031 620
- EP-A1- 3 031 621
- US-A1- 2012 029 114
- US-A1- 2012 208 919

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

EP-A-3 031 620 and EP-A-3 031 621, which have been both published only after the priority date of this application, each disclose a pneumatic tire having a tread comprising a rubber composition comprising a solution polymerized styrene-butadiene rubber, a polybutadiene and from 30 to 80 phr of a combination of an oil and a resin having a Tg of least 30°C.

US-A-2012/0208919 describes a tire comprising a rubber composition comprising polybutadiene rubber, a functionalized solution polymerized styrene-butadiene rubber, silica and carbon black.

### Summary of the Invention

The invention relates to a tire in accordance with claim 1.

Dependent claims refer to preferred embodiments of the invention.

In one aspect of the invention, a pneumatic tire is provided having a tread comprising a vulcanized or vulcanizable rubber composition comprising, based on 100 parts by weight of elastomer (phr),
(A) from 50 to 90 phr of a solution polymerized styrene-butadiene rubber having a glass transition temperature (Tg) ranging from -65 °C to -55 °C;
(B) from 50 to 10 phr of polybutadiene having a cis 1,4 content greater than 95 percent and a Tg ranging from -80 to -110 °C; and
(C) from 30 to 80 phr of a combination of an oil and a terpene phenol resin, the terpene phenol resin having a Tg greater than 100 °C.

### Description of Example Embodiments of the Invention

There is disclosed to a pneumatic tire having a tread comprising a vulcanizable or vulcanized rubber composition comprising, based on 100 parts by weight of elastomer (phr),
(A) from 50 to 90 phr of a solution polymerized styrene-butadiene rubber having a glass transition temperature (Tg) ranging from -65 °C to -55 °C;
(B) from 50 to 10 phr of polybutadiene having a cis 1,4 content greater than 95 percent and a Tg ranging from -80 to -110 °C; and
(C) from 30 to 80 phr of a combination of an oil and a terpene phenol resin, the terpene phenol resin having a Tg greater than 100 °C.

The rubber composition includes from 50 to 90 phr of a styrene-butadiene rubber having a glass transition temperature (Tg) ranging from -65 °C to -55 °C.

In a preferred aspect of the invention, the styrene-butadiene rubber may functionalized with an alkoxysilane group and at least one of a primary amine group and thiol group. In one embodiment, the styrene-butadiene rubber is obtained by copolymerizing styrene and butadiene, and characterized in that the styrene-butadiene rubber has a primary amino group and/or thiol group and an alkoxysilyl group which are bonded to the polymer chain. In one embodiment, the alkoxysilyl group is an ethoxysilyl group.

The primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. However, the primary amino group and/or thiol group is preferably introduced to the polymerization initiating terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber is produced as disclosed in US-B-7,342,070. In another embodiment, the styrene-butadiene rubber is produced as disclosed in WO-A-2007/047943.

In one embodiment, and as taught in US-B-7,342,070, the styrene-butadiene rubber is of the formula (I) or (II) 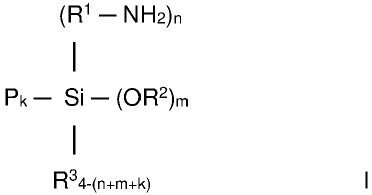 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 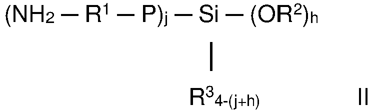 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

RN-(CH₂)_{X}Si(OR^{'})₃, III

wherein R in combination with the nitrogen (N) atom is a protected amine group which upon appropriate post-treatment yields a primary amine, R' represents a group having 1 to 18 carbon atoms selected from an alkyl, a cycloalkyl, an allyl, or an aryl; and X is an integer from 1 to 20. In one embodiment, at least one R' group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

In one embodiment, the rubber composition includes from 50 to 90 phr of styrene-butadiene rubber functionalized with an alkoxysilane group and a primary amine group or thiol group.

Suitable styrene-butadiene rubbers functionalized with an alkoxysilane group and a primary amine group are available commercially, such as HPR 340 from Japan Synthetic Rubber (JSR).

In one embodiment, the solution polymerized styrene-butadiene rubber is as disclosed in WO-A-2007/047943 and is functionalized with an alkoxysilane group and a thiol, and comprises the reaction product of a living anionic polymer and a silane-sulfide modifier represented by the formula VII

(R⁴O)ₓR⁴_{y}Si-R⁵-S-SiR⁴₃ VII

wherein Si is silicon; S is sulfur; O is oxygen; x is an integer selected from 1, 2 and 3;y is an integer selected from 0, 1, and 2; x+y=3;R⁴ is the same or different and is (C₁-C₁₆) alkyl; and R⁵ is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

The solution polymerized styrene-butadiene rubber has a glass transition temperature in a range from -65 °C to -55 °C.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition.

The glass transition temperature is determined as a peak midpoint by a differential scanning calorimeter (DSC) at a temperature rate of increase of 10ºC per minute, according to ASTM D7426 or equivalent.

Suitable styrene-butadiene rubbers functionalized with an alkoxysilane group and a thiol group are available commercially, such as Sprintan SLR 3402 from Styron.

Another component of the rubber composition is from 50 to 10 phr of polybutadiene having a cis 1,4 content greater than 95 percent and a Tg ranging from -80 to -110 °C. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95ºC to -105ºC. Suitable polybutadiene rubbers are available commercially, such as Budene^{®} 1229 from Goodyear and the like, having a Tg of -108 °C and cis 1,4, content of 96%.

The rubber composition includes a combination of processing oil and a terpene phenol resin in an amount ranging from 30 to 80 phr. In one embodiment, the rubber composition includes a combination of processing oil and resin in an amount ranging from 30 to 50 phr. In one embodiment, the rubber composition includes a combination of processing oil and resin in an amount ranging from 50 to 80 phr.

In one embodiment, the rubber composition includes from 5 to 35 phr of processing oil, and 15 to 45 phr of resin. In one embodiment, the rubber composition includes from 5 to 20 phr of processing oil, and 45 to 70 phr of resin.

In one embodiment, the weight ratio of resin to oil is greater than 1. In one embodiment, the weight ratio of resin to oil is greater than 3. In one embodiment, the weight ratio of resin to oil is greater than 6.

The rubber composition includes a processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, and low PCA oils, such as MES, TDAE, and heavy naphthenic oils, and vegetable oils such as sunflower, soybean, and safflower oils.

In one embodiment, the rubber composition includes a low PCA oil. Suitable low PCA oils include but are not limited to mild extraction solvates (MES), treated distillate aromatic extracts (TDAE), and heavy naphthenic oils as are known in the art; see for example US-A-5,504,135; US-B-6,103,808; US-B-6,399,697; US-B-6,410,816; US-B-6,248,929; US-B-6,146,520; U.S. US-A-2001/00023307; US-A-2002/0000280; US-A-2002/0045697; US-A-2001/0007049; EP-A-0 839 891; JP-A-2002-097369; and ES-A-2122917. Generally, suitable low PCA oils include those having a glass transition temperature Tg in a range of from -40ºC to -80ºC. MES oils generally have a Tg in a range of from -57ºC to -63ºC. TDAE oils generally have a Tg in a range of from -44ºC to -50ºC. Heavy naphthenic oils generally have a Tg in a range of from -42ºC to -48ºC.

The measurement of the Tg of the TDAE oils and other oils is DSC according to ASTM E1356, or equivalent.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

In one embodiment, the low PCA oil is an MES, TDAE or heavy naphthenic type having characteristics as identified in the following table.

| | MES | TDAE | Heavy Naphthenic |
|---|---|---|---|
| Aromatics % (2140) | 11 - 17 | 25-30 | 11 - 17 |
| Spec. Gravity @ 15ºC [kg/l] | 0.895 - 0.925 | 0.930 - 0.960 | 0.920 - 0.950 |
| Visc. 40ºC (cSt) | 150 - 230 | 370 - 430 | 350-820 |
| Visc. 100ºC (cSt) | 13-17 | 16-22 | 17-33 |
| Visc. Gravity Const. | 0.825 - 0.865 | 0.860 - 0.890 | 0.840 - 0.870 |
| Refractive Index | 1.495 - 1.510 | 1.520 - 1.540 | 1.500 - 1.520 |
| Tg [ºC] / inflection | -60 ± 3 | -47 ± 3 | -45 ± 3 |
| Aniline Point [ºC] | 85-100 | | |
| Pour Point [ºC] | 0 max | 30 max | 0 max |
| DMSO [%, IP 346] | < 2.9 | < 2.9 | < 2.9 |
| Flashpoint [ºC] | >220 | >240 | >240 |

In one embodiment, the low PCA oil may be an MES type that is a complex combination of hydrocarbons predominantly comprising saturated hydrocarbons in the range of C₂₀ to C₅₀ obtained by (1) solvent extraction of heavy petroleum distillate; or (2) treating of heavy petroleum distillate with hydrogen in the presence of a catalyst; followed by solvent dewaxing. In one embodiment, the low PCA oil contains not more than 1 mg/kg of benzo(a)pyrene, and not more than 10 mg/kg total of the following polycyclic aromatic hydrocarbons: benzo(a)pyrene, benzo(e)pyrene, benzo(a)anthracene, benzo(b)fluoranthene, benzo(j)fluoranthene, benzo(k)fluoranthene, dibenzo(a,h)anthracene, and chrysene.

Suitable TDAE oils are available as Tudalen SX500 from Klaus Dahleke KG, VivaTec 400 and VivaTec 500 from H&R Group, and Enerthene 1849 from BP, and Extensoil 1996 from Repsol. The oils may be available as the oil alone or along with an elastomer in the form of an extended elastomer.

Suitable vegetable oils include, for example, soybean oil, sunflower oil and canola oil which are in the form of esters containing a certain degree of unsaturation.

The rubber composition includes a terpene phenol resin having a Tg greater than 100 °C.

The terpene phenol is generally described as the reaction product of a phenol and a terpene. The terpene monomer as the raw material of the terpene phenol resin is not particularly limited. It is preferable that the terpene monomer is a monoterpene hydrocarbon such as α-pinene and limonene. From the standpoint of the excellent balance between the loss property and the rigidity, raw monomers comprising α-pinene are more preferable, and α-pinene is most preferable.

As the terpene phenol resin described above, resins of various grades are available as commercial products such as "YS POLYSTER" and "MIGHTYACE G" manufactured by YASUHARA CHEMICAL Co., Ltd.

The glass transition temperature Tg of the terpene phenol resin is considered herein to be greater than 100 °C, depending somewhat upon an intended use of the prepared tire and the nature of the polymer blend for the tire tread.

The measurement of the Tg for resins is DSC according to ASTM D6604 or equivalent.

In one embodiment, the terpene phenol resin has a Tg ranging from 100 to 130 °C. In one embodiment, the terpene phenol resin has a Tg ranging from 105 to 125 °C. In one embodiment, the terpene phenol resin has a Tg ranging from 110 to 120°C.

In one embodiment, the terpene phenol resin has a softening point according to ASTM No. E-28 greater than 150ºC.

In one embodiment, the terpene phenol resin has a softening point ranging from 150 to 180ºC. In one embodiment, the terpene phenol resin has a softening point ranging from 155 to 175ºC. In one embodiment, the terpene phenol resin has a softening point ranging from 160 to 170ºC.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials.

The vulcanizable rubber composition may include from 50 to 160 phr of silica.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243 and 315; silicas available from Rhodia, with, for example, designations of Z1165MP and Z165GR; and silicas available from Degussa AG with, for example, designations VN2 and VN3.

The vulcanizable rubber composition may include from 5 to 50 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The vulcanizable rubber composition may include both silica and carbon black in a combined concentration of from 50 to 160 phr, in any weight ratio of silica to carbon black. In one embodiment, the vulcanizable rubber composition includes both silica and carbon black in approximately the same weight amounts, i.e., a weight ratio of about 1.

Other fillers may be used in the rubber composition including, but not limited to, particulate fillers including ultra high molecular weight polyethylene (UHMWPE), particulate polymer gels such as those disclosed in US-B-6,242,534; US-B-6,207,757; US-B-6,133,364; US-B-6,372,857; US-A-5,395,891 ; or US-B-6,127,488, and plasticized starch composite filler such as that disclosed in US-A-5,672,639.

It may be preferred to have the rubber composition for use in the tire component to additionally contain a conventional sulfur containing organosilicon compound. Examples of suitable sulfur containing organosilicon compounds are of the formula:

Z - Alk - Sₙ - Alk - Z VIII

in which Z is selected from the group consisting of 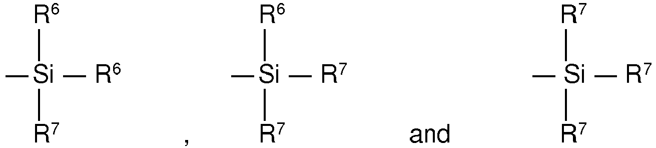
where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3*'*-bis(trimethoxy or triethoxy silylpropyl) sulfides. The most preferred compounds are 3,3'-bis(triethoxysilylpropyl) disulfide and 3,3*'*-bis(triethoxysilylpropyl) tetrasulfide. Therefore, as to formula VIII, preferably Z is 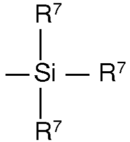 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include compounds disclosed in US-A-2006/0041063. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z^{™} from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 5 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4, preferably about 0.8 to about 2.0, phr. In another embodiment, combinations of a primary and a secondary accelerator might be used with the secondary accelerator being used in smaller amounts, such as from about 0.05 to about 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition is preferably incorporated in a tread of a tire.

The pneumatic tire of the present invention may be a race tire, passenger tire, aircraft tire, agricultural, earthmover, off-the-road or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating and the present invention. All parts are parts by weight unless specifically identified otherwise.

### Example I

This example illustrates the advantage of a rubber composition according to the invention. Rubber compounds were mixed according to the formulations shown in Table 1, with amounts given in phr. The compounds were cured and tested for physical properties as shown in Table 2.

The data of Table 2 provides evidence on the beneficial combination of a low Tg polymer matrix with a plasticizer mixture comprised of a high level of high Tg traction resin. Compound physical properties of the inventive Sample 2 and Sample 3 outperform Control Sample 1 which is formed using a lower Tg traction resin.

Sample 2 is formed by replacing a relatively low Tg traction resin with a relatively high Tg traction resin at equal loading level in the rubber formulation as in Sample 1. Sample 2 (as compared with Sample 1) shows improved wet and wear performance with no loss in rolling resistance. Sample 3 is formed by replacing 30 phr of a relatively low Tg traction resin by 20 phr of a relatively high Tg traction resin and increasing the loading level of oil from 20 to 30 phr. Sample 3 (as compared with Sample 1) shows improved rolling resistance with no loss in wet or wear performance.

In that way, the known trade-off between wear and wet performances can be overcome making the approach useful for use in tire tread compounds.

**Table 1.**

| Sample No. | 1 | 2 | 3 |
|---|---|---|---|
| SBR¹ | 75 | 75 | 75 |
| BR² | 25 | 25 | 25 |
| Silica³ | 125 | 125 | 125 |
| Resin⁴ | 30 | 0 | 0 |
| Resin⁵ | 0 | 30 | 20 |
| Oil⁶ | 20 | 20 | 30 |
| Antidegradant ⁷ | | | |
| Waxes⁸ | | | |
| Sulfur | 1.2 | 1.2 | 1.2 |
| Silane⁹ | 7.8 | 7.8 | 7.8 |
| Accelerators ¹⁰ | 5 | 5 | 5 |
| StearicAcid | 5 | 5 | 5 |
| ZnO | 2.5 | 2.5 | 2.5 |

| | | | |
|---|---|---|---|
| ¹ Solution polymerized SBR with styrene content of 15% and 1,2-vinyl content of 30%, Tg = -60 °C, functionalized with thiol group and alkoxysilane, as SLR3402 from Styron. ² High cis polybutadiene, obtained as Budene 1229 from The Goodyear Tire & Rubber Company ³ Hi-Sil 315G-D precipitated silica from PPG ⁴ Copolymer of styrene and alpha-methylstyrene, Tg = 39 °C, obtained as Sylvatraxx4401 from Arizona Chemicals ⁵ Terpene phenol resin, Tg = 110 °C, softening point = 160 °C, as Polyster T160 from Yasuhara Chemicals ⁶ low PCA type, treated distilled aromatic extract ⁷ mixed p-phenylene diamine type ⁸ Paraffinic and microcrystalline types ⁹ Silane polysulfide ¹⁰ Sulfenamide and guanidine types | | | |

**Table 2.**

| Sample No. | 1 | 2 | 3 |
|---|---|---|---|
| Tensile Properties¹ | | | |
| Elongation (%) | 581 | 614 | 534 |
| Modulus 300% (MPa) | 7.2 | 6.7 | 7.3 |
| Tensile Strength (MPa) | 17.2 | 17.4 | 15.5 |

| Viscoelastic Properties² | | | |
|---|---|---|---|
| TanD(100 °C) | 0.17 | 0.16 | 0.16 |
| G'(100 °C) | 2.56 | 2.42 | 2.29 |

| Rebound³ | | | |
|---|---|---|---|
| Wet indicator: | | | |
| Rebound 0 °C, % | 17.7 | 14.7 | 18.3 |
| RR indicator: | | | |
| Rebound 100 °C, % | 56.4 | 56.7 | 59.3 |

| Wear Properties⁴ | | | |
|---|---|---|---|
| Wear Indicator: | | | |
| Abrasion - DIN (Rating) | 100 | 106 | 100 |

| | | | |
|---|---|---|---|
| ¹Data according to Automated Testing System instrument by the Instron Corporation. Such instrument may determine ultimate tensile, ultimate elongation, modulii, etc. Data reported in the Table is generated by running the ring tensile test station which is an Instron 4201 load frame. ²Measured at 2% strain, frequency 0.33/3.33 Hz, 100 C. Data according to Rubber Process Analyzer as RPA 2000 instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, April 26 and May 10, 1993. ³ Rebound is a measure of hysteresis of the compound when subject to loading, as measured by ASTM D1054. Generally, the lower the measured rebound at 0 °C, the greater the wet traction. The higher the measured rebound at 100 °C, the lower the rolling resistance. ⁴ Data according to DIN 53516 abrasion resistance test procedure using a Zwick drum abrasion unit, model 6102 with 2.5 Newtons force. DIN standards are German test standards. The DIN abrasion results are reported as relative values to a control rubber composition used by the laboratory. | | | |

## Claims

1. A pneumatic tire having a tread comprising a rubber composition comprising, based on 100 parts by weight of elastomer (phr),
(A) from 50 to 90 phr of a solution polymerized styrene-butadiene rubber having a glass transition temperature (Tg) as measured in accordance with ASTM D7426 in a range of from -65 °C to -55 °C;
(B) from 50 to 10 phr of a polybutadiene having a cis-1,4 content greater than 95 percent and a Tg as measured in accordance with ASTM D7426 in a range of from -80 to -110 °C; and
(C) from 30 to 80 phr of a combination of an oil and a terpene phenol resin, the terpene phenol resin having a Tg as measured in accordance with ASTM D6604 greater than 100 °C.

2. The pneumatic tire of claim 1, wherein the solution polymerized styrene-butadiene rubber is functionalized with an alkoxysilane group and at least one functional group selected from the group consisting of primary amines and thiols.

3. The pneumatic tire of claim 1 or 2, wherein the terpene phenol resin has a Tg as measured in accordance with ASTM D6604 in a range of from 100 to 130 °C or from 105 to 125 °C.

4. The pneumatic tire of claim 3, wherein the terpene phenol resin has a Tg as measured in accordance with ASTM D6604 in a range of from 110 to 120 °C.

5. The pneumatic tire of at least one of the previous claims, wherein the terpene phenol resin has a softening point temperature as measured in accordance with ASTM E28 greater than 150 °C.

6. The pneumatic tire of at least one of the previous claims, wherein the terpene phenol resin has a softening point temperature as measured in accordance with ASTM E28 in a range of from 150 to 180 °C or from 155 to 175 °C.

7. The pneumatic tire of claim 6, wherein the terpene phenol resin has a softening point temperature as measured in accordance with ASTM E28 in a range of from 160 to 170 °C.

8. The pneumatic tire of at least one of the previous claims, wherein the rubber composition comprises from 5 to 35 phr of the oil, and from 15 to 45 phr of the terpene phenol resin.

9. The pneumatic tire of at least one of the previous claims 1 to 7, wherein the rubber composition comprises from 5 to 20 phr of the oil, and from 45 to 70 phr of the terpene phenol resin.

10. The pneumatic tire of at least one of the previous claims, wherein the rubber composition further comprises from 50 to 160 phr of silica.

11. The pneumatic tire of at least one of the previous claims, wherein the oil is selected from the group consisting of aromatic, paraffinic, naphthenic, MES, TDAE, heavy naphthenic oils, and vegetable oils.

12. The pneumatic tire of at least one of the previous claims, wherein the terpene phenol resin is the reaction product of a phenol and α-pinene.

13. The pneumatic tire of at least one of the previous claims, wherein the solution polymerized styrene-butadiene rubber is functionalized with an alkoxysilane group and a primary amine group, and is represented by the formula (1) or (2) 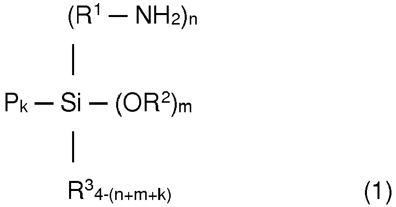
wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having of from 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 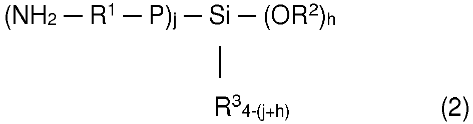
werein P, R¹, R² and R³ have the same definitions as give for the above-mentioned formula (1), j is an integer of 1 to 3, and h is an integer of 1 to 3, with the provision that j+h is an integer of 2 to 4.

14. The pneumatic tire of at least one of the previous claims 1 to 12, wherein the solution polymerized styrene-butadiene rubber is functionalized with an alkoxysilane group and a primary amine group comprises the reaction product of a living polymer chain and a terminating agent of the formula
RN - (CH₂)_{X} - Si - (OR^{'})₃, I
wherein R in combination with the nitrogen (N) atom is a protected amine group which upon appropriate post-treatment yields a primary amine, R' represents a group having of from 1 to 18 carbon atoms selected from an alkyl, a cycloalkyl, an allyl, or an aryl; and X is an integer of from 1 to 20.

15. The pneumatic tire of at least one of the previous claims, wherein the solution polymerized styrene-butadiene rubber is functionalized with an alkoxysilane group and a thiol, and comprises the reaction product of a living anionic polymer and a silane-sulfide modifier represented by the formula
(R⁴O)ₓR⁴_{y}Si-R⁵-S-SiR⁴₃
wherein Si is silicon; S is sulfur; O is oxygen; x is an integer selected from 1, 2 and 3;y is an integer selected from 0, 1, and 2; x+y=3;R⁴ is the same or different and is (C₁-C₁₆) alkyl; and R⁵ is aryl, and alkyl aryl, or (C₁-C₁₆) alkyl.

## Patentansprüche

1. Luftreifen, der eine Lauffläche hat, die eine Gummizusammensetzung umfasst, die auf der Basis von 100 Gewichtsteilen Elastomer (phr),
(A) von 50 bis 90 phr eines lösungspolymerisierten Styrol-Butadien-Kautschuks, der eine in Übereinstimmung mit ASTM D7426 gemessene Glasübergangstemperatur (Tg) in einem Bereich von -65 °C bis -55 °C hat;
(B) von 50 bis 10 phr eines Polybutadiens, das ein cis-1,4-Gehalt von mehr als 95 Prozent und eine in Übereinstimmung mit ASTM D7426 gemessene Tg in einem Bereich von -80 bis -110 °C hat; und
(C) von 30 bis 80 phr einer Kombination aus einem Öl und einem Terpenphenolharz, wobei das Terpenphenolharz eine in Übereinstimmung mit ASTM D6604 gemessene Tg größer als 100 °C hat, umfasst.

2. Luftreifen nach Anspruch 1, wobei der lösungspolymerisierte Styrol-Butadien-Kautschuk mit einer Alkoxysilangruppe und mindestens einer funktionellen Gruppe, die aus der aus primären Aminen und Thiolen bestehenden Gruppe ausgewählt ist, funktionalisiert ist.

3. Luftreifen nach Anspruch 1 oder 2, wobei das Terpenphenolharz eine in Übereinstimmung mit ASTM D6604 gemessene Tg im Bereich von 100 bis 130 °C oder von 105 bis 125 °C hat.

4. Luftreifen nach Anspruch 3, wobei das Terpenphenolharz eine in Übereinstimmung mit ASTM D6604 gemessene Tg in einem Bereich von 110 bis 120 °C hat.

5. Luftreifen nach mindestens einem der vorhergehenden Ansprüche, wobei das Terpenphenolharz eine in Übereinstimmung mit ASTM E28 gemessene Erweichungspunkttemperatur hat, die größer als 150 °C ist.

6. Luftreifen nach mindestens einem der vorhergehenden Ansprüche, wobei das Terpenphenolharz eine in Übereinstimmung mit ASTM E28 gemessene Erweichungspunkttemperatur im Bereich von 150 bis 180 °C oder von 155 bis 175 °C hat.

7. Luftreifen nach Anspruch 6, wobei das Terpenphenolharz eine in Übereinstimmung mit ASTM E28 gemessene Erweichungspunkttemperatur in einem Bereich von 160 bis 170 °C hat.

8. Luftreifen nach mindestens einem der vorhergehenden Ansprüche, wobei die Gummizusammensetzung 5 bis 35 phr des Öls und 15 bis 45 phr des Terpenphenolharzes umfasst.

9. Luftreifen nach mindestens einem der vorhergehenden Ansprüche 1 bis 7, wobei die Gummizusammensetzung 5 bis 20 phr des Öls und 45 bis 70 phr des Terpenphenolharzes umfasst.

10. Luftreifen nach mindestens einem der vorhergehenden Ansprüche, wobei die Gummizusammensetzung weiterhin 50 bis 160 phr von Kieselsäure umfasst.

11. Luftreifen nach mindestens einem der vorhergehenden Ansprüche, wobei das Öl aus der Gruppe ausgewählt ist, die aus aromatischen, paraffinischen, naphthenischen, MES, TDAE, schweren naphthenischen Ölen und Pflanzenölen besteht.

12. Luftreifen nach mindestens einem der vorhergehenden Ansprüche, wobei das Terpenphenolharz das Reaktionsprodukt eines Phenols und eines α-Pinens ist.

13. Luftreifen nach mindestens einem der vorhergehenden Ansprüche, wobei der lösungspolymerisierte Styrol-Butadien-Kautschuk mit einer Alkoxysilangruppe und einer primären Amingruppe funktionalisiert ist und durch die Formel (1) oder (2) dargestellt ist 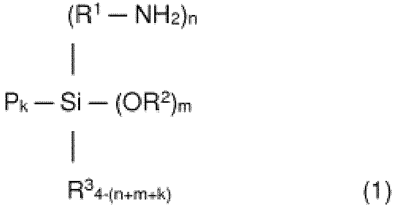
wobei P eine (Co)Polymerkette eines konjugierten Diolefins oder eines konjugierten Diolefins und einer aromatischen Vinylverbindung ist, R¹ eine Alkylengruppe mit 1 bis 12 Kohlenstoffatomen ist, R² und R³, jeweils unabhängig voneinander, eine Alkylgruppe mit 1 bis 20 Kohlenstoffatomen, eine Allylgruppe oder eine Arylgruppe sind, n eine ganze Zahl von 1 oder 2 ist, m eine ganze Zahl von 1 oder 2 ist, und k eine ganze Zahl von 1 oder 2 ist, unter der Voraussetzung, dass n + m + k eine ganze Zahl von 3 oder 4 ist, 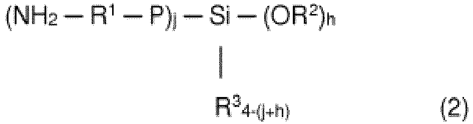
wobei P, R¹, R² und R³ die gleichen Definitionen wie für die oben genannte Formel (1) haben, j eine ganze Zahl von 1 bis 3 ist, und h eine ganze Zahl von 1 bis 3 ist, unter der Voraussetzung, dass j + h eine ganze Zahl von 2 bis 4 ist.

14. Luftreifen nach mindestens einem der vorhergehenden Ansprüche 1 bis 12, wobei der lösungspolymerisierte Styrol-Butadien-Kautschuk mit einer Alkoxysilangruppe und einer primären Amingruppe funktionalisiert ist, und das Reaktionsprodukt einer lebenden Polymerkette und eines Abbruchmittels der Formel
RN-(CH₂)_{X}-Si-(OR^{'})₃, I
umfasst, wobei R in Kombination mit dem Stickstoff (N)-Atom eine geschützte Amingruppe ist, die nach entsprechender Behandlung ein primäres Amin ergibt, R' eine Gruppe mit 1 bis 18 Kohlenstoffatomen darstellt, die aus einer Alkyl-, einer Cycloalkyl-, einer Allyl-, oder einer Aryl-gruppe ausgewählt ist; und X eine ganze Zahl von 1 bis 20 ist.

15. Luftreifen nach mindestens einem der vorhergehenden Ansprüche, wobei der lösungspolymerisierte Styrol-Butadien-Kautschuk mit einer Alkoxysilangruppe und einem Thiol funktionalisiert ist, und das Reaktionsprodukt eines lebenden anionischen Polymers und eines Silane-Sulfidmodifikator der Formel
(R⁴O)ₓR⁴_{y}Si-R^{s}-S-SiR⁴₃
umfasst, wobei Si Silizium ist; S Schwefel ist; O Sauerstoff ist; x eine ganze Zahl ist, ausgewählt aus 1, 2 und 3; y eine ganze Zahl ist, ausgewählt aus 0, 1 und 2; x + y = 3 ; R⁴ identisch oder verschieden ist, und eine (C₁-C₁₆) Alkylgruppe ist; und R⁵ eine Aryl-, eine Alkylaryl- oder eine (C16) Alkyl-gruppe ist.

## Revendications

1. Bandage pneumatique possédant une bande de roulement comprenant une composition de caoutchouc qui comprend, en se basant sur 100 parties en poids d'élastomère (phr),
(A) de 50 à 90 phr d'un caoutchouc de styrène-butadiène qui a été polymérisé en solution qui possède une température de transition vitreuse (Tg), telle qu'on la mesure en conformité avec la norme ASTM D7426, qui se situe dans une plage allant de -65 °C à -55 °C ;
(B) de 50 à 10 phr d'un polybutadiène dont la teneur en unités 1,4 cis est supérieure à 95 % et qui possède une Tg, telle qu'on la mesure en conformité avec la norme ASTM D7426, qui se situe dans une plage allant de -80 °C à -110 °C ; et
(C) de 30 à 80 phr d'une combinaison d'une huile et d'une résine terpène phénolique, la résine terpène phénolique possédant une Tg, telle qu'on la mesure en conformité avec la norme ASTM D6604, qui est supérieure à 100 °C.

2. Bandage pneumatique selon la revendication 1, dans lequel caoutchouc de styrène-butadiène qui a été polymérisé en solution est fonctionnalisé avec un groupe alcoxysilane et au moins un groupe fonctionnel qui est choisi parmi le groupe constitué par des amines primaires et des thiols.

3. Bandage pneumatique selon la revendication 1 ou 2, dans lequel la résine terpène phénolique possède une Tg, telle qu'on la mesure en conformité avec la norme ASTM D6604, qui se situe dans une plage allant de 100 °C à 130 °C ou de 105 °C à 125 °C.

4. Bandage pneumatique selon la revendication 3, dans lequel la résine terpène phénolique possède une Tg, telle qu'on la mesure en conformité avec la norme ASTM D6604, qui se situe dans une plage allant de 110 °C à 120°C.

5. Bandage pneumatique selon au moins une des revendications précédentes, dans lequel la résine terpène phénolique possède une température de point de ramollissement, telle qu'on la mesure en conformité avec la norme ASTM E28, qui est supérieure à 150 °C.

6. Bandage pneumatique selon au moins une des revendications précédentes, dans lequel la résine terpène phénolique possède une température de point de ramollissement, telle qu'on la mesure en conformité avec la norme ASTM E28, qui se situe dans une plage allant de 150 à 180 °C ou de 155 à 175 °C.

7. Bandage pneumatique selon au moins une des revendications précédentes, dans lequel la résine terpène phénolique possède une température de point de ramollissement, telle qu'on la mesure en conformité avec la norme ASTM E28, qui se situe dans une plage allant de 160 à 170 °C.

8. Bandage pneumatique selon au moins une des revendications précédentes, dans lequel la composition de caoutchouc comprend de 5 à 35 phr de l'huile et de 15 à 45 phr de la résine terpène phénolique.

9. Bandage pneumatique selon au moins une des revendications 1 à 7, dans lequel la composition de caoutchouc comprend de 5 à 20 phr de l'huile et de 45 à 70 phr de la résine terpène phénolique.

10. Bandage pneumatique selon au moins une des revendications précédentes, dans lequel la composition de caoutchouc comprend en outre de 50 à 160 phr de silice.

11. Bandage pneumatique selon au moins une des revendications précédentes, dans lequel l'huile est choisie parmi le groupe constitué par des huiles aromatiques, des huiles paraffiniques, des huiles naphténiques, des huiles MES, des huiles TDAE, des huiles naphténiques lourdes et des huiles végétales.

12. Bandage pneumatique selon au moins une des revendications précédentes, dans lequel la résine terpène phénolique est le produit réactionnel d'un phénol et d'un alpha-pinène.

13. Bandage pneumatique selon au moins une des revendications précédentes, dans laquelle le caoutchouc de styrène-butadiène qui a été polymérisé en solution est fonctionnalisé avec un groupe alcoxysilane et un groupe d'amine primaire, et est représenté par la formule (1) ou (2) : 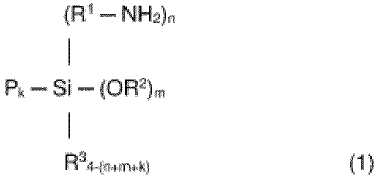
dans laquelle P représente une chaîne (co)polymère d'une dioléfine conjuguée ou d'une dioléfine conjuguée et d'un composé vinylaromatique, R¹ représente un groupe alkylène qui contient de 1 à 12 atomes de carbone, R² et R³ représentent, chacun de manière indépendante, un groupe alkyle qui contient de 1 à 20 atomes de carbone, un groupe allyle ou un groupe aryle, n représente un entier égal à 1 ou 2, m représente un entier égal à 1 ou 2, et k représente un entier égal à 1 ou 2, avec cette réserve que m + n + k représente un entier égal à 3 ou 4 ; 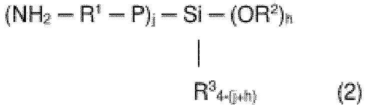
dans laquelle P, R¹, R² et R³ ont les mêmes définitions que celles fournies pour la formule (1) qui a été mentionnée ci-dessus, j représente un entier égal à 1 à 3, et h représente un entier égal à 1 à 3, avec cette réserve que j + h représente un entier égal à 2 à 4.

14. Bandage pneumatique selon au moins une des revendications précédentes 1 à 12, dans laquelle le caoutchouc de styrène-butadiène qui a été polymérisé en solution est fonctionnalisé avec un groupe alcoxysilane et un groupe d'amine primaire, et comprend le produit réactionnel d'une chaîne polymère vivante et d'un agent de terminaison, qui répond à la formule :
RN-(CH₂)ₓ-Si-(OR)₃ I
dans laquelle R, en combinaison avec l'atome d'azote (N), représente un groupe d'amine protégé qui, après un traitement ultérieur approprié, permet d'obtenir une amine primaire, R' représente un groupe qui contient de 1 à 18 atomes de carbone, choisi parmi un groupe alkyle, un groupe cycloalkyle, un groupe allyle ou un groupe aryle ; et X représente un entier allant de 1 à 20.

15. Bandage pneumatique selon au moins une des revendications précédentes, dans laquelle le caoutchouc de styrène-butadiène qui a été polymérisé en solution est fonctionnalisé avec un groupe alcoxysilane et un groupe thiol, et comprend le produit réactionnel d'un polymère anionique vivant et d'un modificateur silane-sulfure répondant à la formule :
(R⁴O)ₓR⁴_{y}Si-R⁵-S-SiR⁴₃
dans laquelle Si représente un atome de silicium ; S représente un atome de soufre ; O représente un atome d'oxygène ; x représente un entier qui est choisi parmi 1, 2 et 3 ; y représente un entier qui est choisi parmi 0, 1 et 2 ; x + y = 3 ; R⁴ est identique ou différent et un groupe alkyle en C₁-C₁₆ ; et R⁵ représente un groupe aryle et un groupe alkylaryle ou un groupe alkyle en C₁-C₁₆.
